(19) Europäisches Patentamt
European Patent Office
Office européen des brevets

(11) **EP 2 836 879 B1**

(12) **EUROPÄISCHE PATENTSCHRIFT**

(45) Veröffentlichungstag und Bekanntmachung des Hinweises auf die Patenterteilung:
**23.11.2016 Patentblatt 2016/47**

(51) Int Cl.:
**G05B 11/38** *(2006.01)*  **G05D 3/20** *(2006.01)*
**F15B 15/00** *(2006.01)*

(21) Anmeldenummer: **13722706.2**

(22) Anmeldetag: **24.04.2013**

(86) Internationale Anmeldenummer:
**PCT/EP2013/058423**

(87) Internationale Veröffentlichungsnummer:
**WO 2013/171041 (21.11.2013 Gazette 2013/47)**

(54) **REGELEINRICHTUNG FÜR EINE HYDRAULIKZYLINDEREINHEIT MIT EINZELVENTILSTEUERUNG**

CONTROL DEVICE FOR A HYDRAULIC CYLINDER UNIT WITH SINGLE VALVE CONTROL

DISPOSITIF DE RÉGULATION POUR UNE UNITÉ DE CYLINDRE HYDRAULIQUE AVEC COMMANDE SÉPARÉE DE CHAQUE SOUPAPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.05.2012  EP 12168164**

(43) Veröffentlichungstag der Anmeldung:
**18.02.2015  Patentblatt 2015/08**

(73) Patentinhaber: **Primetals Technologies Germany GmbH**
**91052 Erlangen (DE)**

(72) Erfinder: **TAUTZ, Wilfried**
**91301 Forchheim (DE)**

(74) Vertreter: **Metals@Linz**
**Primetals Technologies Austria GmbH**
**Intellectual Property Upstream IP UP**
**Turmstraße 44**
**4031 Linz (AT)**

(56) Entgegenhaltungen:
**EP-A1- 1 965 083**    **DE-A1-102007 003 243**
**DE-B3-102007 051 857**

**Beschreibung**

Die vorliegende Erfindung geht aus von einer Regeleinrichtung zum Regeln einer Hydraulikzylindereinheit,

- wobei die Regeleinrichtung einen Regler aufweist, der eingangsseitig eine Sollgröße und eine Istgröße entgegen nimmt und anhand der Differenz von Sollgröße und Istgröße eine vorläufige Stellgröße für eine Ventilsteuereinheit der Hydraulikzylindereinheit ermittelt,
- wobei die Sollgröße eine von einem Kolben der Hydraulikzylindereinheit anzunehmende Sollstellung und die Istgröße eine vom Kolben angenommene Iststellung sind oder die Sollgröße eine vom Kolben auszuübende Sollkraft und die Istgröße eine vom Kolben ausgeübte Istkraft sind,
- wobei dem Regler eine Linearisierungseinheit nachgeordnet ist, welche anhand der vorläufigen Stellgröße und eines Linearisierungsfaktors eine endgültige Stellgröße ermittelt, die sie an eine Ventilsteuereinheit ausgibt, so dass der Kolben mit einer Verstellgeschwindigkeit verstellt wird,
- wobei die Linearisierungseinheit den Linearisierungsfaktor dynamisch als Funktion der Iststellung des Kolbens und beidseitig des Kolbens sowie pumpen- und tankseitig der Ventilsteuereinheit herrschender Arbeitsdrücke bestimmt,
- wobei die Linearisierungseinheit den Linearisierungsfaktor derart bestimmt, dass ein Verhältnis der Verstellgeschwindigkeit zur Differenz von Sollgröße und Istgröße unabhängig von der Iststellung des Kolbens und den Arbeitsdrücken ist.

Hydraulikzylindereinheiten zeigen ein Regelverhalten, das stark vom Betriebspunkt der Hydraulikzylindereinheit abhängig ist. Ein Regler, der für einen bestimmten Betriebspunkt optimiert wurde, arbeitet in anderen Betriebspunkten weniger gut oder schlecht.

Zum Verbessern des Regelverhaltens ist im Stand der Technik bekannt, als Regelcharakteristik des Reglers eine so genannte Schmetterlingskurve vorzusehen. Die Schmetterlingskurve deckt jedoch nicht den gesamten Raum möglicher Betriebspunkte ab und arbeitet daher nicht in jedem Betriebszustand optimal.

Weiterhin ist es für Positionsregler für Hydraulikzylindereinheiten bekannt, für die Sollstellung und die Iststellung unabhängig voneinander je eine nichtlineare Transformation vorzunehmen und zusätzlich eine Teillinearisierung des Positionsreglers vorzunehmen. Diese Vorgehensweise ist sehr aufwändig.

Aus der DE 10 2007 051 857 B3 und der inhaltsgleichen US 2010/294 125 A1 ist eine Regeleinrichtung zum Regeln einer Hydraulikzylindereinheit der obenstehend erläuterten Art bekannt. Diese Regeleinrichtung liefert sowohl bei Positionsregelung als auch bei Kraftregelung optimale Regelergebnisse.

Die Aufgabe der vorliegenden Erfindung besteht darin, Möglichkeiten zu schaffen, mittels derer eine Regeleinrichtung der eingangs genannten Art auf einfache Weise flexibler einsetzbar ist.

Die Aufgabe wird durch eine Regeleinrichtung mit den Merkmalen des Anspruchs 1 gelöst. Die Ansprüche 2 bis 6 betreffen vorteilhafte Ausgestaltungen der Regeleinrichtung.

Erfindungsgemäß wird vorgeschlagen, eine Regeleinrichtung zum Regeln einer Hydraulikzylindereinheit zu schaffen,

- wobei die Regeleinrichtung einen Regler aufweist, der eingangsseitig eine Sollgröße und eine Istgröße entgegen nimmt und anhand der Differenz von Sollgröße und Istgröße eine vorläufige Stellgröße für Ventilsteuereinheiten der Hydraulikzylindereinheit ermittelt,
- wobei die Sollgröße eine von einem Kolben der Hydraulikzylindereinheit anzunehmende Sollstellung und die Istgröße eine vom Kolben angenommene Iststellung sind oder die Sollgröße eine vom Kolben auszuübende Sollkraft und die Istgröße eine vom Kolben ausgeübte Istkraft sind,
- wobei dem Regler eine Linearisierungseinheit nachgeordnet ist, welche anhand der vorläufigen Stellgröße und Linearisierungsfaktoren endgültige Stellgrößen ermittelt, die sie an Ventilsteuereinheiten ausgibt, so dass der Kolben mit einer Verstellgeschwindigkeit verstellt wird,
- wobei die Linearisierungseinheit die Linearisierungsfaktoren dynamisch als Funktion zumindest der Iststellung des Kolbens und beidseitig des Kolbens sowie pumpen- und tankseitig der Ventilsteuereinheiten herrschender Arbeitsdrücke bestimmt,
- wobei die Linearisierungseinheit die Linearisierungsfaktoren derart bestimmt, dass ein Verhältnis der Verstellgeschwindigkeit zur Differenz von Sollgröße und Istgröße unabhängig von der Iststellung des Kolbens und den Arbeitsdrücken ist.

Erfindungsgemäß sind also mehrere Ventilsteuereinheiten vorhanden, für die individuell jeweils eine endgültige Stellgröße ermittelt wird.

Vorzugsweise wird der Linearisierungseinheit zusätzlich ein Parameter zugeführt, den die Linearisierungseinheit bei der Bestimmung der Linearisierungsfaktoren berücksichtigt. Dadurch kann mindestens eine weitere Randbedingung eingehalten werden.

Im einfachsten Fall bestimmt die Linearisierungseinheit in dem Fall, dass der Parameter einen ersten Wert aufweist, die Linearisierungsfaktoren derart, dass zwei der Linearisierungsfaktoren den Wert Null aufweisen und zwei andere der Linearisierungsfaktoren von Null verschiedene Werte aufweisen. Die beiden anderen Linearisierungsfaktoren können insbesondere untereinander den gleichen Wert aufweisen. In diesem Fall ergibt sich das gleiche Verhalten wie bei einer konventionellen einzelnen Ventilsteuereinheit, also wie bei der DE 10 2007 051 857 B3.

Alternativ oder zusätzlich ist es möglich, dass die Linearisierungseinheit in dem Fall, dass der Parameter einen zweiten Wert aufweist, die Linearisierungsfaktoren derart bestimmt, dass die Summe der beidseitig des Kolbens herrschenden Arbeitsdrücke sich der Summe der pumpen- und tankseitig der Ventilsteuereinheiten herrschenden Arbeitsdrücke annähert. In diesem Fall ergibt sich eine besonders niedrige Druckdifferenz an den Ventilsteuereinheiten.

Es ist möglich, dass die Ventilsteuereinheiten als Proportionalventile ausgebildet sind. Vorzugsweise sind die Ventilsteuereinheiten jedoch als binär geschaltete Schaltventile ausgebildet.

Die Regeleinrichtung kann als Hardwarestruktur ausgebildet sein. Vorzugsweise ist sie jedoch als softwareprogrammierbare Regeleinrichtung ausgebildet und mit einem Softwaremodul programmiert, so dass sie auf Grund der Programmierung mit dem Softwaremodul erfindungsgemäß ausgebildet ist.

Das Softwaremodul umfasst Maschinencode, dessen Abarbeitung durch eine an eine Hydraulikzylindereinheit angebundene softwareprogrammierbare Regeleinrichtung, bewirkt, dass die Regeleinrichtung wie obenstehend beschrieben ausgebildet wird. Das Softwaremodul kann in maschinenlesbarer Form auf einem Datenträger gespeichert sein.

Prinzipiell ist die erfindungsgemäße Regeleinrichtung universell verwendbar. Vorzugsweise jedoch wird sie zur Anstellungsregelung eines Walzgerüsts verwendet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1          ein Blockschaltbild einer Regeleinrichtung und einer Hydraulikzylindereinheit,
FIG 2          den Aufbau einer Ventilsteuereinrichtung,
FIG 3          den Aufbau der Regeleinrichtung,
FIG 4 und 5    je eine Ermittlungseinrichtung einer Linearisierungseinheit und
FIG 6          eine Anstellungseinrichtung für eine Walze eines Walzgerüsts.

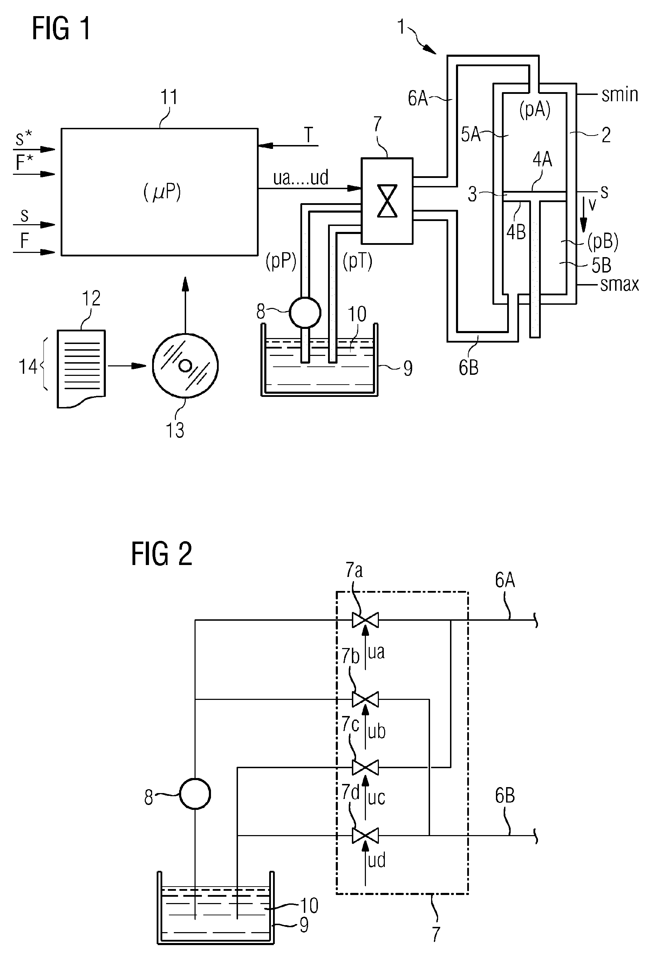

Gemäß FIG 1 weist eine Hydraulikzylindereinheit 1 einen Hydraulikzylinder 2 auf, in dem ein Kolben 3 beweglich gelagert ist. Der Kolben 3 ist innerhalb des Hydraulikzylinders 1 zwischen einer Minimalstellung smin und einer Maximalstellung smax bewegbar. Er befindet sich also zu jedem Zeitpunkt bei einer Iststellung s, die zwischen der Minimalstellung smin und der Maximalstellung smax liegt.

Der Kolben 3 weist eine erste Arbeitsfläche 4A und eine zweite Arbeitsfläche 4B auf. Jede Arbeitsfläche 4A, 4B ist einem entsprechenden Arbeitsvolumen 5A, 5B zugewandt.

Die Arbeitsvolumina 5A, 5B sind über Hydraulikpfade 6A, 6B und eine Ventilsteuereinrichtung 7 mit einer Hydraulikpumpe 8 und einem Hydraulikreservoir 9 hydraulisch verbunden. Die Hydraulikpfade 6A, 6B erstrecken sich hierbei von dem jeweiligen Arbeitsvolumen 5A, 5B bis zur Ventilsteuereinrichtung 7.

Wenn der Kolben 3 sich in seiner Minimalstellung smin befindet, befindet sich im Hydraulikpfad 6A ein bestimmtes Volumen einer Hydraulikflüssigkeit 10. Dieses Volumen ist die minimale Menge an Hydraulikflüssigkeit 10, die sich zwischen der Ventilsteuereinrichtung 7 und der Arbeitsfläche 4A des Kolbens 3 befindet. Diese Menge an Hydraulikflüssigkeit 10 ist das minimal mögliche wirksame Volumen für das Arbeitsvolumen 5A. Es wird nachfolgend mit dem Bezugszeichen VminA bezeichnet.

In analoger Weise befindet sich im Hydraulikpfad 6B eine bestimmte Menge an Hydraulikflüssigkeit 10, wenn der Kolben 3 sich in seiner Maximalstellung smax befindet. Diese Menge an Hydraulikflüssigkeit 10 stellt ein minimal mögliches wirksames Volumen für das Arbeitsvolumen 5B dar. Dieses Minimalvolumen wird nachfolgend mit dem Bezugszeichen VminB bezeichnet.

Wenn der Kolben 3 sich bei einer beliebigen Iststellung s befindet, weist das Arbeitsvolumen 5A einen Volumenwert VA auf, der sich zu

$$VA = VminA + AKA \ (s - smin)$$

ergibt. Mit dem Bezugszeichen AKA ist hierbei der Flächenwert der dem Arbeitsvolumen 5A zugewandten Arbeitsfläche 4A des Kolbens 3 bezeichnet. Es ist weiterhin möglich, das wirksame Volumen VA durch den Flächenwert AKA zu dividieren. Der Quotient

$$hA = VA/AKA$$

entspricht einer effektiven Höhe einer Säule der Hydraulikflüssigkeit 10 über dem Kolben 3.

In analoger Weise können anhand des minimal möglichen wirksamen Volumens VminB, des Flächenwerts AKB der dem Arbeitsvolumen 5B zugewandten Arbeitsfläche 4B, der Iststellung s und der Maximalstellung smax gemäß den Beziehungen

$$VB = VminB + AKB (smax - s)$$

und

$$hB = VB/AKB$$

korrespondierende Werte VB und hB für die zweite Arbeitsfläche 4B bzw. das zweite Arbeitsvolumen 5B ermittelt werden.

Im Arbeitsvolumen 5A herrscht ein erster Arbeitsdruck pA, im zweiten Arbeitsvolumen 5B ein zweiter Arbeitsdruck pB. Über die Hydraulikpumpe 8 wird die Hydraulikflüssigkeit 10 mit einem Pumpendruck pP beaufschlagt. Im Hydraulikreservoir 9 herrscht ein Tankdruck pT. Der Pumpendruck pP und der Tankdruck pT entsprechen einem pumpenseitig und einem tankseitig der Ventilsteuereinheit 7 herrschenden Arbeitsdruck.

Die Ventilsteuereinrichtung 7 weist gemäß FIG 2 mehrere Ventilsteuereinheiten 7a bis 7d auf. Insbesondere sind die beiden Arbeitsvolumina 5A, 5B über je eine eigene Ventilsteuereinheit 7a, 7b mit der Hydraulikpumpe 8 und über je eine eigene weitere Ventilsteuereinheit 7c, 7d mit dem Hydraulikreservoir 9 verbunden. Jeder der vier Ventilsteuereinheiten 7a bis 7d wird jeweils eine eigene endgültige Stellgröße ua bis ud zugeführt. Die jeweilige Ventilsteuereinheit 7a bis 7d wird entsprechend der jeweiligen endgültigen Stellgröße ua bis ud angesteuert.

Es ist möglich, dass die Ventilsteuereinheiten 7a bis 7d Proportionalventile sind. Vorzugsweise handelt es sich jedoch um binär geschaltete Schaltventile, die also nur zwischen den Zuständen vollständig geöffnet und vollständig geschlossen hin und her geschaltet werden können, aber keine definierten Zwischenzustände annehmen können. Die Ansteuerung der Ventilsteuereinheiten 7a bis 7d erfolgt in diesem Fall durch eine pulsweitenmodulierte und/oder pulscodemodulierte Ansteuerung.

Die Ventilsteuereinrichtung 7 und mit ihr die gesamte Hydraulikzylindereinheit 1 wird mittels einer Regeleinrichtung 11 geregelt. Die Regeleinrichtung 11 ist vorzugsweise entsprechend FIG 1 als softwareprogrammierbare Regeleinrichtung 11 ausgebildet. Die Regeleinrichtung 11 wird in diesem Fall mittels eines Softwaremoduls 12 programmiert. Das Softwaremodul 12 kann der Regeleinrichtung 11 beispielsweise mittels eines Datenträgers 13 zugeführt werden, auf dem das Softwaremodul 12 in maschinenlesbarer Form gespeichert ist. Als Datenträger 13 kommt hierbei prinzipiell ein beliebiger Datenträger in Frage. Dargestellt ist (rein beispielhaft) in FIG 1 eine CD-ROM 13.

Das Softwaremodul 12 umfasst Maschinencode 14, der von der Regeleinrichtung 11 abarbeitbar ist. Das Abarbeiten des Maschinencodes 14 durch die Regeleinrichtung 11 bewirkt, dass die Regeleinrichtung 11 die Hydraulikzylindereinheit 1 so regelt, wie dies nachfolgend näher erläutert wird. Die Programmierung der Regeleinrichtung 11 mit dem Softwaremodul 12 bewirkt die entsprechende Ausbildung der Regeleinrichtung 11.

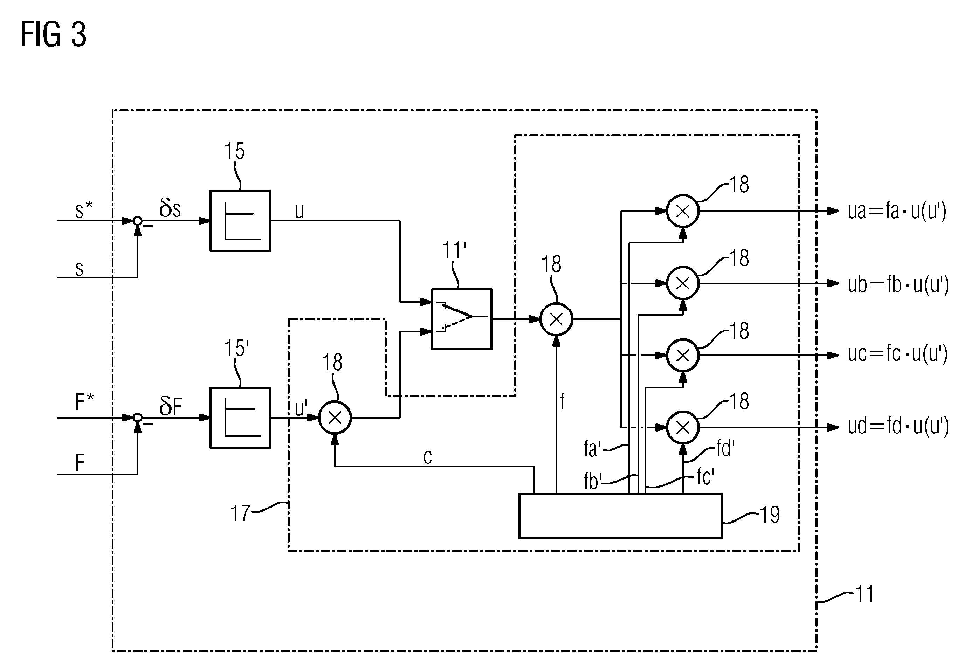

Der Regeleinrichtung 11 werden gemäß FIG 1 zunächst eine Sollgröße s*, F* und eine Istgröße s, F zugeführt. Es ist möglich, dass es sich bei den zugeführten Größen s*, F*, s, F um eine vom Kolben 3 anzunehmende Sollstellung s* und die vom Kolben 3 angenommene Iststellung s handelt. Alternativ ist es möglich, dass es sich bei den zugeführten Größen s*, F*, s, F um eine vom Kolben 3 auszuübende Sollkraft F* und eine vom Kolben 3 ausgeübte Istkraft F handelt. Gemäß FIG 3 ist es alternativ weiterhin möglich, dass der Regeleinrichtung 11 beide Wertepaare s*, s, F*, F zugeführt werden und dass mittels einer Umschalteinrichtung 11' festgelegt wird, ob ein Positionsregler 15 oder ein Kraftregler 15' der Regeleinrichtung 11 aktiv ist. Die Regler 15, 15' können prinzipiell beliebige Regler sein. Eine Ausgestaltung der Regler 15, 15' als P-Regler ist jedoch in der Regel ausreichend und auch bevorzugt.

Unabhängig davon, ob die Regeleinrichtung 11 als Positionsregler 15 oder als Kraftregler 15' oder als zwischen Positions- und Kraftregelung umschaltbarer Regler ausgebildet ist, ermittelt die Regeleinrichtung 11 mittels des entsprechenden Reglers 15, 15' anhand der Differenz $\delta s$, $\delta F$ von Sollgröße s*, F* und Istgröße s, F eine vorläufige Stellgröße u, u' für die Ventilsteuereinrichtung 7 und gibt die Stellgröße u, u' aus. Die Regeleinrichtung 11 führt dadurch die entsprechende Regelung der Hydraulikzylindereinheit 1 (genauer: des Kolbens 3) durch.

Den Reglern 15, 15' ist gemäß FIG 3 eine Linearisierungseinheit 17 nachgeordnet. Die Linearisierungseinheit 17 weist Multiplizierer 18 und eine Ermittlungseinrichtung 19 auf. Die Ermittlungseinrichtung 19 bestimmt in noch zu erläuternder Weise Linearisierungsfaktoren fa bis fd und gibt die Linearisierungsfaktoren fa bis fd an die Multiplizierer 18 aus. Die Multiplizierer 18 nehmen weiterhin vom Regler 15 die vorläufige Stellgröße u, u' entgegen und multiplizieren die vorläufige Stellgröße u, u' mit den ihnen zugeführten Linearisierungsfaktoren fa bis fd. Die Linearisierungseinheit 17 ermittelt auf diese Weise die endgültigen Stellgrößen ua bis ud, welche an die Ventilsteuereinheiten 7a bis 7d ausgegeben werden.

Die Ventilsteuereinheiten 7a bis 7d stellen sich entsprechend den an sie übermittelten Stellgrößen ua bis ud ein. Dadurch wird bewirkt, dass der Kolben 3 mit einer Verstellgeschwindigkeit v verschoben bzw. verstellt wird.

Die Ermittlungseinrichtung 19 der Linearisierungseinheit 17 bestimmt die Linearisierungsfaktoren fa bis fd dynamisch als Funktion zumindest der Iststellung s des Kolbens 3, der beidseitig des Kolbens 3 herrschenden Arbeitsdrücke pA, pB sowie der pumpen- und tankseitig der Ventilsteuereinheiten 7a bis 7d herrschenden Arbeitsdrücke pP, pT. Die Ermittlungseinrichtung 19 bestimmt die Linearisierungsfaktoren fa bis fd derart, dass ein Verhältnis der Verstellgeschwindigkeit v bei Positionsregelung zur Differenz δs von Sollstellung s* und Iststellung s und bei Kraftregelung zur Differenz δF von Sollkraft F* und Istkraft F unabhängig von der Iststellung s und den Arbeitsdrücken pA, pB, pP, pT ist.

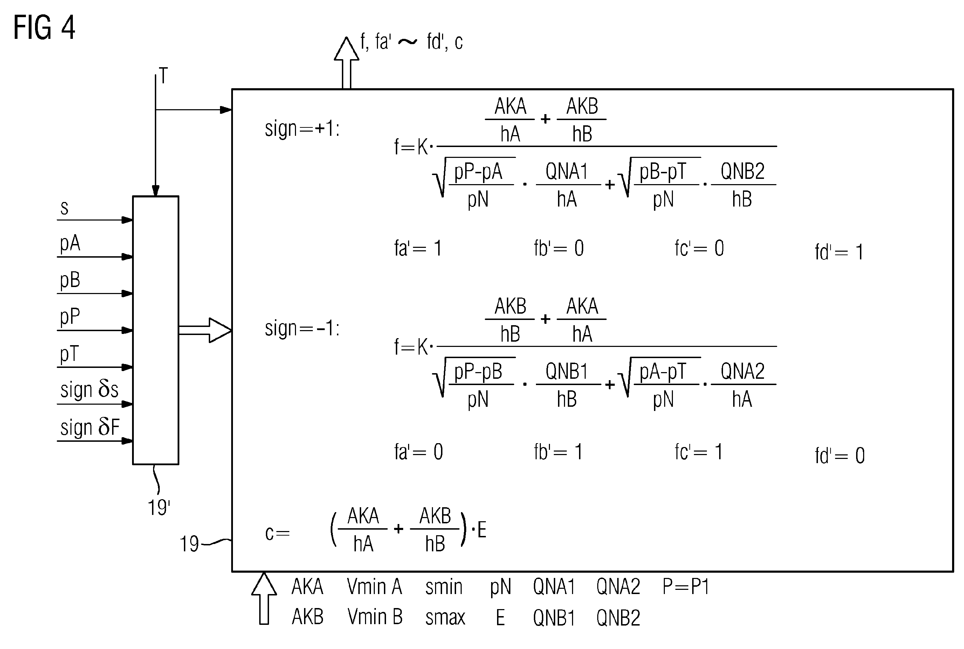

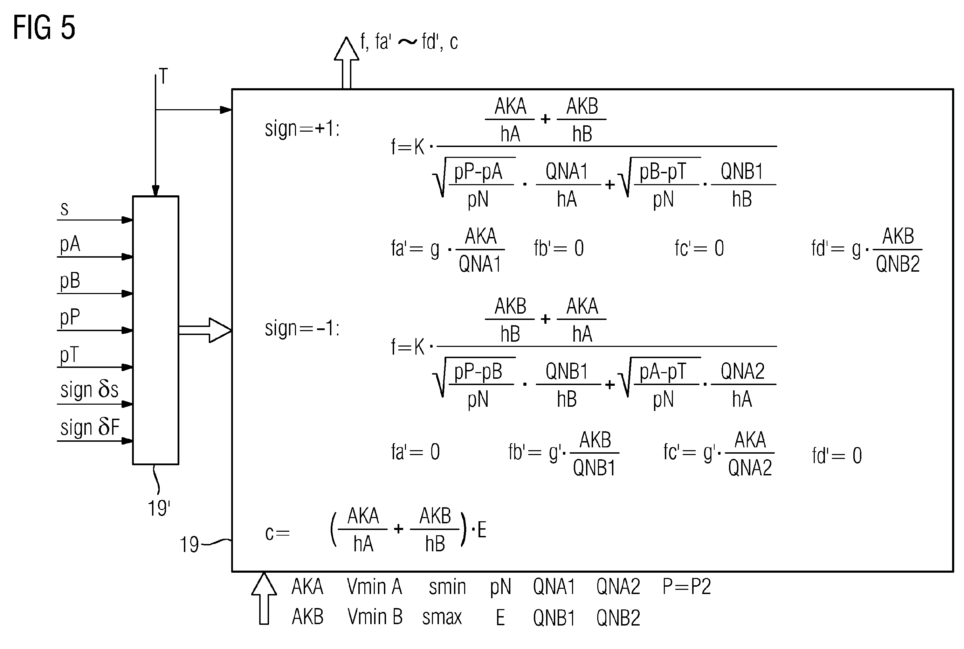

Die Wirkungsweise der Ermittlungseinrichtung 19 wird nachfolgend in Verbindung mit den FIG 4 und 5 detaillierter erläutert.

Die Regeleinrichtung 11 ist üblicherweise mit einem Arbeitstakt T getaktet. Mit der Frequenz des Arbeitstaktes T nimmt die Regeleinrichtung 11 jeweils eine neue Sollgröße s*, F* und eine neue Istgröße s, F entgegen, ermittelt die Stellgrößen ua bis ud und gibt die Stellgrößen ua bis ud an die Ventilsteuereinheiten 7a bis 7d aus.

Ebenfalls mit dem Arbeitstakt T wird der Ermittlungseinrichtung 19 jeweils ein neuer Wert für die Iststellung s und die beidseitig des Kolbens 3 herrschenden Arbeitsdrücke pA, pB zugeführt. Weiterhin wird der Ermittlungseinrichtung 19 das Vorzeichen der Regeldifferenz δs, δF zugeführt. Das taktweise Zuführen dieser Größen s, pA, pB, δs, δF ist in den FIG 4 und 5 dadurch angedeutet, dass der Ermittlungseinrichtung 19 ein Latch 19' vorgeordnet ist, das mit dem Arbeitstakt T getaktet ist.

Der Pumpendruck pP und der Tankdruck pT sind in der Regel konstant. Es ist daher möglich, diese beiden Drücke pP, pT der Ermittlungseinrichtung 19 einmalig (d. h. vorab und damit als Parameter) zuzuführen. Alternativ ist jedoch ebenfalls möglich, den pumpenseitigen Arbeitsdruck pP und den tankseitigen Arbeitsdruck pT der Ermittlungseinrichtung 19 getaktet und damit als Variable zuzuführen.

In der Regel benötigt die Ermittlungseinrichtung 19 zur exakten Berechnung der Linearisierungsfaktoren fa bis fd weitere Daten. Die weiteren Daten umfassen in der Regel Leistungsdaten pN, QNA, QNB der Ventilsteuereinheit 7, die beidseitig des Kolbens 3 wirksamen Arbeitsflächen AKA, AKB sowie die beidseits des Kolbens 3 minimal möglichen wirksamen Volumina VminA, VminB. Diese Werte können der Ermittlungseinrichtung 19 fest vorgegeben sein, beispielsweise durch das Softwaremodul 12. Alternativ können die weiteren Daten - zumindest teilweise - der Ermittlungseinrichtung 19 nach der Programmierung der Regeleinrichtung 11 als Parameter (d. h. im Rahmen der Inbetriebsetzung der Regeleinrichtung 11) vorgegeben werden, die während des Betriebs der Regeleinrichtung 11 unverändert beibehalten werden.

Die Linearisierungsfaktoren fa bis fd lassen sich gemäß FIG 3 als Produkt eines Basislinearisierungsfaktors f und eines jeweiligen Zusatzlinearisierungsfaktors fa' bis fd' schreiben. Der Basislinearisierungsfaktor f ist für alle Linearisierungsfaktoren fa bis fd einheitlich. Die Zusatzlinearisierungsfaktoren fa' bis fd' sind individuell für den jeweiligen Linearisierungsfaktor fa bis fd.

Der Basislinearisierungsfaktor f ist abhängig vom Vorzeichen der Regeldifferenz δs, δF. Im Falle einer Positionsregelung ist der Basislinearisierungsfaktor f damit abhängig von der Bewegungsrichtung des Kolbens 3, das heißt von der Richtung, in die der Kolben 3 verschoben werden soll. Nachfolgend wird angenommen, dass die Regeldifferenz δs, δF größer als Null ist. In diesem Fall bestimmt die Ermittlungseinrichtung 19 den Basislinearisierungsfaktor f vorzugsweise zu

$$f = K \cdot \frac{\dfrac{AKA}{hA} + \dfrac{AKB}{hB}}{\sqrt{\dfrac{pP - pA}{pN} \cdot \dfrac{QNA1}{hA}} + \sqrt{\dfrac{pB - pT}{pN} \cdot \dfrac{QNB2}{hB}}}$$

Die in obiger Formel verwendeten Größen sind - mit Ausnahme der Leistungsdaten pN, QNA, QNB der Ventilsteuereinheit 7 bereits definiert. Die Leistungsdaten pN, QNA und QNB der Ventilsteuereinheit 7 haben folgende Bedeutung:

- pN ist ein (prinzipiell beliebiger) Nominaldruck. Er entspricht einem Referenzdruck, auf den die Größen QNA1, QNA2, QNB1 und QNB2 normiert sind.
- QNA1 ist ein Nennvolumenstrom, der in das Arbeitsvolumen 5A strömt, wenn eine Differenz zwischen dem Pumpendruck pP und dem im Arbeitsvolumen 5A herrschenden Arbeitsdruck pA gleich dem Nominaldruck pN ist.
- QNA2 ist ein Nennvolumenstrom, der aus dem Arbeitsvolumen 5A strömt, wenn eine Differenz zwischen dem Arbeitsdruck pA und dem Tankdruck pT gleich dem Nominaldruck pN ist.
- QNB1 und QNB2 sind - bezogen auf das Arbeitsvolumen 5B - in analoger Weise definiert.
- K ist ein frei wählbarer Skalierungsfaktor.

Wie bereits erwähnt, ist der Basislinearisierungsfaktor f vom Vorzeichen der Regeldifferenz δs, δF abhängig. In dem Fall, dass die Regeldifferenz δs, δF negativ ist, ergibt sich der Basislinearisierungsfaktor f vorzugsweise zu

$$f = K \cdot \frac{\dfrac{AKB}{hB} + \dfrac{AKA}{hA}}{\sqrt{\dfrac{pP - pB}{pN}} \cdot \dfrac{QNB1}{hB} + \sqrt{\dfrac{pA - pT}{pN}} \cdot \dfrac{QNA2}{hA}}$$

Der Basislinearisierungsfaktor f entspricht somit dem (einzigen) Linearisierungsfaktor, der in der DE 10 2007 051 857 B3 und der korrespondierenden US-Schrift ermittelt wird.

Bei der Bestimmung der Zusatzlinearisierungsfaktoren fa' bis fd' berücksichtigt die Ermittlungseinrichtung 19 gemäß den FIG 4 und 5 vorzugsweise zusätzlich einen Parameter P, welcher der Ermittlungseinrichtung 19 von außen zugeführt wird, beispielsweise von einer Bedienperson. Der Parameter P kann - je nach Ausgestaltung - ein binärer Wert sein, eine analoge Größe sein, eine Mehrzahl von binären Werten sein und unter Umständen sogar eine Mehrzahl von analogen Größen sein.

Wenn die Regeldifferenz δs, δF positiv ist und der Parameter P einen ersten Wert P1 aufweist, setzt die Ermittlungseinrichtung 19 gemäß FIG 4 die Zusatzlinearisierungsfaktoren fa' und fd' auf von Null verschiedene Werte, die Zusatzlinearisierungsfaktoren fb' und fc' auf den Wert Null. Die Zusatzlinearisierungsfaktoren fa' und fd' können insbesondere den gleichen Wert aufweisen, beispielsweise den Wert 1.

Wenn die Regeldifferenz δs, δF negativ ist und der Parameter P einen ersten Wert P1 aufweist, setzt die Ermittlungseinrichtung 19 gemäß FIG 4 die Zusatzlinearisierungsfaktoren fb' und fc' auf von Null verschiedene Werte, die Zusatzlinearisierungsfaktoren fa' und fd' auf den Wert Null. Die Zusatzlinearisierungsfaktoren fb' und fc' können insbesondere den gleichen Wert aufweisen, beispielsweise den Wert 1.

Wenn der Parameter P einen zweiten Wert P2 aufweist, bestimmt die Ermittlungseinrichtung 19 die Zusatzlinearisierungsfaktoren fa' bis fd' gemäß FIG 5 derart, dass die Arbeitsdrücke pA, pB, pP, pT sich der Beziehung

$$pP + pT = pA + pB$$

annähern. Wenn die Regeldifferenz δs, δF positiv ist, bestimmt die Ermittlungseinrichtung 19 in diesem Fall die Zusatzlinearisierungsfaktoren fa' und fd' zu

$$fa' = g \cdot \frac{AKA}{QNA1} \qquad \text{und} \qquad fd' = g \cdot \frac{AKB}{QNB2}$$

mit

$$g = \frac{\sqrt{\dfrac{pP - pA}{pN}} \cdot \dfrac{QNA1}{hA} + \sqrt{\dfrac{pB - pT}{pN}} \cdot \dfrac{QNB2}{hB}}{\sqrt{\dfrac{pP - pA}{pN}} \cdot \dfrac{AKA}{hA} + \sqrt{\dfrac{pB - pT}{pN}} \cdot \dfrac{AKB}{hB}}$$

Die Zusatzlinearisierungsfaktoren fb' und fc' weisen in diesem Fall den Wert Null auf.

Wenn die Regeldifferenz δs, δF hingegen negativ ist, bestimmt die Ermittlungseinrichtung 19 in diesem Fall die Zusatzlinearisierungsfaktoren fb' und fc' zu

$$fb' = g' \cdot \frac{AKB}{QNB1} \qquad \text{und} \qquad fc' = g' \cdot \frac{AKA}{QNA2}$$

mit

$$g' = \frac{\sqrt{\dfrac{pA - pT}{pN}} \cdot \dfrac{QNA2}{hA} + \sqrt{\dfrac{pP - pB}{pN}} \cdot \dfrac{QNB1}{hB}}{\sqrt{\dfrac{pA - pT}{pN}} \cdot \dfrac{AKA}{hA} + \sqrt{\dfrac{pP - pB}{pN}} \cdot \dfrac{AKB}{hB}}$$

Die Zusatzlinearisierungsfaktoren fa' und fd' weisen in diesem Fall den Wert Null auf.

Obenstehend wurde eine Vorgehensweise erläutert, bei welcher die Linearisierungsfaktoren fa bis fd als Produkt des Basislinearisierungsfaktors f und eines jeweiligen Zusatzlinearisierungsfaktors fa' bis fd' ermittelt werden. Es ist selbstverständlich auch eine direkte Ermittlung der Linearisierungsfaktoren fa bis fd - also ohne Umweg über die Produktbildung - möglich.

Obenstehend wurden weiterhin die Linearisierungsfaktoren fa bis fd ermittelt, welche erforderlich sind, um eine Linearisierung im positionsgeregelten Betrieb der Hydraulikzylindereinheit 1 zu bewirken. Falls eine Kraftregelung erfolgt, ist gemäß der Darstellung in FIG 3 lediglich noch eine Skalierung mit einer Federkonstante c der Hydraulikflüssigkeit 10 erforderlich. Die Federkonstante c ergibt sich zu

$$c = \left( \frac{AKA}{hA} + \frac{AKB}{hB} \right) \cdot E$$

E bedeutet hierbei die Elastizitätskonstante der Hydraulikflüssigkeit 10.

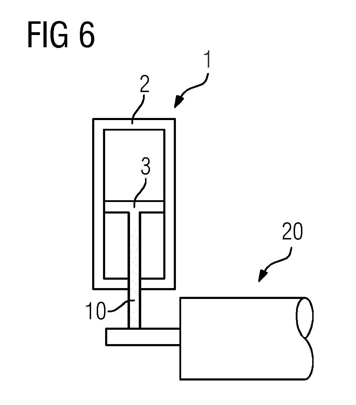

Die erfindungsgemäße Anordnung aus Hydraulikzylindereinheit 1 und Regeleinrichtung 11 ist prinzipiell beliebig einsetzbar. Vorzugsweise wird sie jedoch gemäß FIG 6 zur Anstellungsregelung eines in FIG 6 schematisch angedeuteten Walzgerüsts 20 verwendet.

Die vorliegende Erfindung weist viele Vorteile auf. Insbesondere erfolgt in jedem Betriebspunkt der Hydraulikzylindereinheit 1 ein optimaler Betrieb der Regeleinrichtung 11. Die Regelung ist vollständig linearisiert. Transformationen (vergleiche nicht lineares HGC) sind nicht erforderlich. Weiterhin ist - ebenfalls im Gegensatz zum nicht linearen HGC - auf einfache Weise eine Einbindung der vorliegenden Erfindung in bereits vorhandene Regelsysteme möglich, da bereits vorhandene überlagerte Regelstrukturen (vermaschte Regelungen und dergleichen) nicht verändert werden müssen. Es ergibt sich damit eine vereinfachte Inbetriebsetzung und Wartbarkeit der Regeleinrichtung 11 gemäß der vorliegenden Erfindung.

**Patentansprüche**

**1.** Regeleinrichtung zum Regeln einer Hydraulikzylindereinheit (1),

- wobei die Regeleinrichtung einen Regler (15, 15') aufweist, eingerichtet eingangsseitig eine Sollgröße (s*, F*) und eine Istgröße (s, F) entgegenzunehmen und anhand der Differenz (δs, δF) von Sollgröße (s*, F*) und Istgröße (s, F) eine vorläufige Stellgröße (u, u') für Ventilsteuereinheiten (7) der Hydraulikzylindereinheit (1) zu ermitteln
- wobei die Sollgröße (s*, F*) eine von einem Kolben (3) der Hydraulikzylindereinheit (1) anzunehmende Sollstellung (s*) und die Istgröße (s, F) eine vom Kolben (3) angenommene Iststellung (s) sind oder die Sollgröße (s*, F*) eine vom Kolben (3) auszuübende Sollkraft (F*) und die Istgröße (s, F) eine vom Kolben (3) ausgeübte Istkraft (F) sind,
- wobei dem Regler (15, 15') eine Linearisierungseinheit (17) nachgeordnet ist, eingerichtet, anhand der vorläufigen Stellgröße (u, u') und Linearisierungsfaktoren (fa bis fd) endgültige Stellgrößen (ua bis ud) zu ermitteln und an die Ventilsteuereinheiten (7a bis 7d) auszugeben so dass der Kolben (3) mit einer Verstellgeschwindigkeit (v) verstellt wird,

- wobei die Linearisierungseinheit (17) eingerichtet ist, die Linearisierungsfaktoren (fa bis fd) dynamisch als Funktion zumindest der Iststellung (s) des Kolbens (3) und beidseitig des Kolbens (3) sowie pumpen- und tankseitig der Ventilsteuereinheiten (7a bis 7d) herrschender Arbeitsdrücke (pA, pB, pP, pT) zu bestimmen

- wobei die Linearisierungseinheit (17) eingerichtet ist, die Linearisierungsfaktoren (fa bis fd) derart zu bestimmen dass ein Verhältnis der Verstellgeschwindigkeit (v) zur Differenz ($\delta s$, $\delta F$) von Sollgröße (s*, F*) und Istgröße (s, F) unabhängig von der Iststellung (s) des Kolbens (3) und den Arbeitsdrücken (pA, pB, pP, pT) ist.

2. Regeleinrichtung nach Anspruch 1,
**dadurch gekennzeichnet, dass** der Linearisierungseinheit (17) zusätzlich ein Parameter (P) zugeführt wird und die Linearisierungseinheit (17) eingerichtet ist, den Parameter (P) bei der Bestimmung der Linearisierungsfaktoren (fa bis fd) zu berücksichtigen.

3. Regeleinrichtung nach Anspruch 2,
**dadurch gekennzeichnet, dass** die Linearisierungseinheit (17) eingerichtet ist, in dem Fall, dass der Parameter (P) einen ersten Wert (P1) aufweist, die Linearisierungsfaktoren (fa bis fd) derart zu bestimmen dass zwei der Linearisierungsfaktoren (fa bis fd) den Wert Null aufweisen und zwei andere der Linearisierungsfaktoren (f) von Null verschiedene Werte aufweisen.

4. Regeleinrichtung nach Anspruch 2 oder 3,
**dadurch gekennzeichnet, dass** die Linearisierungseinheit (17) eingerichtet ist, in dem Fall, dass der Parameter (P) einen zweiten Wert (P2) aufweist, die Linearisierungsfaktoren (fa bis fd) derart zu bestimmen dass die Summe der beidseitig des Kolbens (3) herrschenden Arbeitsdrücke (pA, pB) sich der Summe der pumpenund tankseitig der Ventilsteuereinheiten (7a bis 7d) herrschenden Arbeitsdrücke (pP, pT) annähert.

5. Regeleinrichtung nach einem der obigen Ansprüche,
**dadurch gekennzeichnet, dass** die Ventilsteuereinheiten (7a bis 7d) als binär geschaltete Schaltventile ausgebildet sind.

6. Regeleinrichtung nach einem der obigen Ansprüche,
**dadurch gekennzeichnet, dass** sie als softwareprogrammierbare Regeleinrichtung ausgebildet ist und mit einem Softwaremodul (12) programmiert ist, so dass sie aufgrund der Programmierung mit dem Softwaremodul (12) nach einem der obigen Ansprüche ausgebildet ist.

7. Softwaremodul, das Maschinencode (14) umfasst, **dadurch gekennzeichnet, dass** eine an eine Hydraulikzylindereinheit (1) angebundene softwareprogrammierbare Regeleinrichtung aufgrund der Programmierung mit dem Softwaremodul als Regeleinrichtung (11) nach Anspruch 6 ausgebildet ist.

8. Datenträger, auf dem in maschinenlesbarer Form ein Softwaremodul (12) nach Anspruch 7 gespeichert ist.

9. Verwendung einer mittels einer Regeleinrichtung (11) nach einem der Ansprüche 1 bis 6 geregelten Hydraulikzylindereinheit (1) zur Anstellungsregelung eines Walzgerüsts (20).

**Claims**

1. Control device for controlling a hydraulic cylinder unit (1),

- wherein the control device has a controller (15, 15') designed, on the input side, to accept a setpoint variable (s*, F*) and an actual variable (s, F) and on the basis of the difference ($\delta s$, $\delta F$) between setpoint variable (s*, F*) and actual variable (s, F), to determine a preliminary manipulated variable (u, u') for valve control units (7) of the hydraulic cylinder unit (1),

- wherein the setpoint variable (s*, F*) is a setpoint position (s*) to be taken up by a piston (3) of the hydraulic cylinder unit (1) and the actual variable (s, F) is an actual position (s) taken up by the piston (3) or the setpoint variable (s*, F*) is a setpoint force (F*) to be exerted by the piston (3) and the actual variable (s, F) is an actual force (F) to be exerted by the piston (3),

- wherein a linearisation unit (17) is arranged downstream of the controller (15, 15') designed, on the basis of the preliminary manipulated variable (u, u') and linearisation factors (fa to fd), to determine definitive manipulated variables (ua to ud) and to output them to valve control units (7a to 7d) so that the piston (3) is adjusted with an adjustment speed (v),

- wherein the linearisation unit (17) is designed to determine the linearisation factors (fa to fd) dynamically as a function at least of the actual position (s) of the piston (3) and to determine working pressures (pA, pB, pP, pT) obtaining on both sides of the piston (3) as well as on the pump and tank side of the valve control units (7a to 7d),

- wherein the linearisation unit (17) is designed to determine the linearisation factors (fa to fd) such that a ratio of the adjustment speed (v) to the difference ($\delta$s, $\delta$F) between setpoint variable (s*, F*) and actual variable (s, F) is independent of the actual position (s) of the cylinder (3) and the working pressures (pA, pB, pP, pT).

2. Control device according to claim 1,
**characterised in that** the linearisation unit (17) is additionally supplied with a parameter (P) and the linearisation unit (17) is designed to take account of the parameter (P) in the determination of the linearisation factors (fa to fd).

3. Control device according to claim 2,
**characterised in that** the linearisation unit (17) is designed, in the event of the parameter (P) having a first value (P1), to determine the linearisation factors (fa to fd) such that two of the linearisation factors (fa to fd) have the value zero and two other linearisation factors (f) have a value differing from zero.

4. Control device according to claim 2 or 3,
**characterised in that** the linearisation unit (17) is designed, in the event of the parameter (P) having a second value (P2), to determine the linearisation factors (fa to fd) such that the sum of the working pressures (pA, pB) obtaining on both sides of the piston (3) approximates to the sum of the working pressures (pP, pT) of obtaining on the pump side and tank side of the valve control units (7a to 7d).

5. Control device according to one of the above claims,
**characterised in that** the valve control units (7a to 7d) are embodied as binary-switched switching valves.

6. Control device according to one of the above claims,
**characterised in that** it is embodied as a software-programmable control device and is programmed with a software module (12) so that, as a result of the programming with the software module, it is embodied according to one of the above claims.

7. Software module having machine code (14), **characterised in that** on the basis of the programming with the software module a software-programmable control device (11) linked to a hydraulic cylinder unit (1) is embodied as control device (11) according to claim 6.

8. Data medium on which a software module (12) according to claim 7 is stored in machine-readable form.

9. Use of a hydraulic cylinder unit controlled by means of a control device (11) according to one of claims 1 to 6 for adjustment control of a roll stand (20).

**Revendications**

1. Dispositif de régulation destiné à la régulation d'une unité à vérin hydraulique (1),

- dans lequel le dispositif de régulation présente un régulateur (15, 15'), mis en place côté entrée pour recevoir une grandeur théorique (s*, F*) et une grandeur réelle (s, F) et pour établir à l'aide de la différence ($\delta$s, $\delta$F) entre la grandeur théorique (s*, F*) et la grandeur réelle (s, F) une grandeur de commande préliminaire (u, u') pour des unités de commande de soupapes (7) de l'unité à vérin hydraulique (1),

- dans lequel la grandeur théorique (s*, F*) est une position théorique (s*) adoptée par un piston (3) de l'unité à vérin hydraulique (1) et la grandeur réelle (s, F) est une position réelle (s) adoptée par le piston (3) ou la grandeur théorique (s*, F*) est une force théorique (F*) à exercer par le piston (3) et la grandeur réelle (s, F) est une force réelle (F) exercée par le piston (3),

- dans lequel une unité de linéarisation (17) est installée en aval du régulateur (15, 15'), mise en place à l'aide de la grandeur de commande préliminaire (u, u') et de facteurs de linéarisation (fa à fd) pour établir des grandeurs de commande définitives (ua à ud) et distribuer les unités de commande de soupapes (7a à 7d), de sorte que le piston (3) est réglé avec une vitesse de réglage (v),

- dans lequel l'unité de linéarisation (17) est mise en place pour déterminer les facteurs de linéarisation (fa à fd) de manière dynamique en tant que fonction au moins de la position réelle (s) du piston (3) et des pressions de fonctionnement (pA, pB, pP, pT) régnant des deux côtés du piston (3) ainsi que côté pompe et côté cuve des unités de commande de soupapes (7a à 7d),

- dans lequel l'unité de linéarisation (17) est mise en place pour déterminer les facteurs de linéarisation (fa à fd) de telle sorte qu'un rapport de la vitesse de réglage (v) par rapport à la différence ($\delta$s, $\delta$F) entre la grandeur théorique (s*, F*) et la grandeur réelle (s, F) est indépendant de la position réelle (s) du piston (3) et des pressions de fonctionnement (pA, pB, pP, pT).

2. Dispositif de régulation selon la revendication 1,
**caractérisé en ce qu'**à l'unité de linéarisation (17) est en outre conduit un paramètre (P) et l'unité de linéarisation (17) est mise en place pour prendre en compte le paramètre (P) lors de la détermination des facteurs de linéarisation (fa à fd).

3. Dispositif de régulation selon la revendication 2,
**caractérisé en ce que** l'unité de linéarisation (17) est mise en place dans le cas où le paramètre (P) présente une première valeur (P1) pour déterminer les facteurs de linéarisation (fa à fd) de telle sorte que deux des facteurs de linéarisation (fa à fd) présentent la valeur zéro et deux autres des facteurs de linéarisation (f) présentent des valeurs différentes de zéro.

4. Dispositif de régulation selon la revendication 2 ou 3,
**caractérisé en ce que** l'unité de linéarisation (17) est mise en place dans le cas où le paramètre (P) présente une deuxième valeur (P2) pour déterminer les facteurs de linéarisation (fa à fd) de telle sorte que la somme des pressions de fonctionnement (pA, pB) régnant des deux côtés du piston (3) se rapproche de la somme des pressions de fonctionnement (pP, pT) régnant côté pompe et côté cuve des unités de commande de soupapes (7a à 7d).

5. Dispositif de régulation selon l'une des revendications mentionnées ci-dessus,
**caractérisé en ce que** les unités de commande de soupapes (7a à 7d) sont configurées en tant que soupapes de commande à commande binaire.

6. Dispositif de régulation selon l'une des revendications mentionnées ci-dessus,
**caractérisé en ce qu'**il est configuré en tant que dispositif de régulation programmable par logiciel et est programmé avec un module logiciel (12) de sorte qu'il est configuré en raison de la programmation avec le module logiciel (12) selon l'une des revendications mentionnées ci-dessus.

7. Module logiciel, qui comprend un code machine (14),
**caractérisé en ce qu'**un dispositif de régulation programmable par logiciel raccordé à une unité à vérin hydraulique (1) est configuré en raison de la programmation avec le module logiciel en tant que dispositif de régulation (11) selon la revendication 6.

8. Support de données, sur lequel un module logiciel (12) selon la revendication 7 est mis en mémoire sous une forme lisible par une machine.

9. Utilisation d'une unité à vérin hydraulique (1) régulée au moyen d'un dispositif de régulation (11) selon l'une des revendications 1 à 6 en vue de la régulation de l'emploi d'une cage de laminoir (20).

## FIG 1

## FIG 2

# FIG 3

EP 2 836 879 B1

## FIG 4

sign=+1:

$$f = K \cdot \dfrac{\dfrac{AKA}{hA} + \dfrac{AKB}{hB}}{\sqrt{\dfrac{pP-pA}{pN}} \cdot \dfrac{QNA1}{hA} + \sqrt{\dfrac{pB-pT}{pN}} \cdot \dfrac{QNB2}{hB}}$$

fa' = 1      fb' = 0      fc' = 0      fd' = 1

sign=−1:

$$f = K \cdot \dfrac{\dfrac{AKB}{hB} + \dfrac{AKA}{hA}}{\sqrt{\dfrac{pP-pB}{pN}} \cdot \dfrac{QNB1}{hB} + \sqrt{\dfrac{pA-pT}{pN}} \cdot \dfrac{QNA2}{hA}}$$

fa' = 0      fb' = 1      fc' = 1      fd' = 0

$$c = \left( \frac{AKA}{hA} + \frac{AKB}{hB} \right) \cdot E$$

Inputs: T, s, pA, pB, pP, pT, sign δs, sign δF

Output: f, fa' ∼ fd', c

19', 19

| AKA | Vmin A | smin | pN | QNA1 | QNA2 | P=P1 |
| AKB | Vmin B | smax | E | QNB1 | QNB2 | |

EP 2 836 879 B1

FIG 5

EP 2 836 879 B1

Inputs: T, s, pA, pB, pP, pT, sign $\delta$s, sign $\delta$F

19' 19

$f, fa' \sim fd', c$

sign=+1:

$$f = K \cdot \frac{\dfrac{AKA}{hA} + \dfrac{AKB}{hB}}{\sqrt{\dfrac{pP-pA}{pN}} \cdot \dfrac{QNA1}{hA} + \sqrt{\dfrac{pB-pT}{pN}} \cdot \dfrac{QNB1}{hB}}$$

$$fa' = g \cdot \frac{AKA}{QNA1} \qquad fb' = 0 \qquad fc' = 0 \qquad fd' = g \cdot \frac{AKB}{QNB2}$$

sign=−1:

$$f = K \cdot \frac{\dfrac{AKB}{hB} + \dfrac{AKA}{hA}}{\sqrt{\dfrac{pP-pB}{pN}} \cdot \dfrac{QNB1}{hB} + \sqrt{\dfrac{pA-pT}{pN}} \cdot \dfrac{QNA2}{hA}}$$

$$fa' = 0 \qquad fb' = g' \cdot \frac{AKB}{QNB1} \qquad fc' = g' \cdot \frac{AKA}{QNA2} \qquad fd' = 0$$

$$c = \left( \frac{AKA}{hA} + \frac{AKB}{hB} \right) \cdot E$$

| AKA | Vmin A | smin | pN | QNA1 | QNA2 | P=P2 |
| AKB | Vmin B | smax | E | QNB1 | QNB2 | |

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007051857 B3
- US 2010294125 A1